# EUROPEAN PATENT SPECIFICATION

(11) **EP 2 913 654 B1**
(45) Date of publication and mention of the grant of the patent: **06.12.2017**
(21) Application number: 13849192.3
(22) Date of filing: 04.10.2013
(51) Int. Cl.: G01N 1/04, B32B 43/00

(54) **SUBSTRATE RECOVERY DEVICE**
SUBSTRATRÜCKGEWINNUNGSVORRICHTUNG
DISPOSITIF DE RÉCUPÉRATION DE SUBSTRAT

(30) Priority: 24.10.2012 JP 2012234749
(43) Date of publication of application: 02.09.2015
(73) Proprietor: Olympus Corporation, Tokyo 192-8507 (JP)
(72) Inventor: MORIMOTO, Nobuhiko, Tokyo 192-8507 (JP)
(74) Representative: Schicker, Silvia
(86) International application number: PCT/JP2013/077162
(87) International publication number: WO 2014/065101

(56) References cited:
- WO-A1-00/57153
- WO-A1-03/010280
- WO-A1-2011/149009
- JP-A- H0 777 657
- JP-A- H11 148 887
- JP-A- 2005 227 113

## Description

### Technical Field

The present invention relates to a substrate collecting device.

### Background Art

Hitherto, there has been known a device adapted to divide a glass substrate, to which a biological tissue section has been attached, together with the section in a state wherein the glass substrate has been attached to a sheet, and to collect some of the divided substrates together with section fragments (refer to, for example, Patent Document 1). According to Patent Document 1, a desired substrate can be selectively collected by pushing, through the sheet, the back surface of the substrate facing downward thereby to cause the substrate to come off from the sheet and fall. As a device that implements such a substrate collecting method, FIG. 9 in Patent Document 1 proposes a configuration that uses an inverted type microscope. Using the inverted type microscope makes it possible to observe in detail from a front direction a substrate and a section set on a stage.

Patent document 2 discloses an apparatus for excising at least one sample from an array of samples including: means for recording an electronic image of the position of at least one sample relative to the other samples in the array (e.g. a digital camera or a scanner); means for utilizing the recorded electronic image to position a cutting tool assembly above the at least one sample in the array, the cutting tool assembly including at least one cutting head; means for rotating the cutting head; means for advancing the cutting head into contact with the at least one sample so as to effect excision of the at least one sample and means for withdrawing the cutting head therefrom; means for ejecting the at least one excised sample at a selected location, and control means configured to control the means for utilizing the recorded electronic image to position a cutting tool assembly above the at least one sample in the array to excise the at least one sample according to the position of the sample relative to the other samples, as determined by the recording means. Since, in order to generate an electronic image of the samples in the array, it is necessary to make them visible to the recording means, the electronic image may be generated from a scan of the samples which are stained or illuminated or otherwise marked with a visible or fluorescent marker, to cause them to be visible to the recording means. The apparatus may further include: table means for supporting the array of samples; display means for displaying the electronic image of the array on a visual display unit; means for selecting a sample on the array for excising by the cutting tool assembly, and means for moving the table means relative to the cutting tool assembly in the plane of the array.

### Citation List

### Patent Documents

Patent Document 1: WO2011/149009
Patent Document 2: WO 00/57153 A1

### Summary of the Invention

### Problems to be solved by the Invention

However, according to Patent Document 1, the stage of the microscope on which a sheet to which a substrate has been attached is rested is moved from a position of observation under the microscope for a long distance away from the microscope, and then fine positioning of the substrate relative to a collecting means for pushing the substrate is carried out. This means that the stage is required to have both an extensive movement range and high positioning accuracy, leading to a complicated stage moving mechanism.

The present invention has been made in view of the situations described above, and it is an object of the invention to provide a substrate collecting device that permits a simple configuration of a stage moving mechanism while still adopting an inverted type optical design.

### Means for solving the problem

To this end, the present invention provides the following means.

The present invention provides a substrate collecting device that detaches and collects some substrates among a plurality of substrates, which have been attached to a sheet member such that the substrates can be detaches by carrying out a predetermined operation, from the sheet member, the substrate collecting device including: a stage on which the sheet member is placed with the plurality of the substrates facing downward and which is movable in a horizontal direction; an acquiring section which causes the substrates to come off from the sheet member and fall by carrying out the predetermined operation on the substrates on the stage from above the stage; an observation section for observing the substrates on the stage from under the stage; a collecting section that collects, under the stage, the substrates which have fallen from the stage; and a moving mechanism which moves the observation section and the collecting section integrally in the horizontal direction, wherein the acquiring section carries out the predetermined operation on the some substrates disposed at a predetermined relative position with respect to the acquiring section, and the moving mechanism is capable of positioning the observation section and the collecting section at a first position at which the observation section is positioned substantially vertically below the predetermined relative position and a second position at which the collecting section is positioned substantially vertically below the predetermined relative position.

According to the present invention, the sheet member to which the substrates have been attached is placed on the stage, the position of the stage is adjusted while observing a desired substrate by the observation section such that the substrate is disposed at a predetermined relative position with respect to the acquiring section, and the substrate disposed at the predetermined relative position is detached and dropped by the acquiring section, thereby allowing the desired substrate to be collected by the collecting section. Here, the positions of the observation section and the collecting section can be switched between the first position and the second position by the moving mechanism, thereby allowing the observation section and the collecting section to be alternatively positioned substantially vertically below the stage, while still adopting an inverted type optical design whereby to observe the substrate on the stage through the observation section from below the stage.

In this case, the movement range of the stage is a sufficiently narrow range required for positioning a substrate relative to the acquiring section, so that the mechanism for moving the stage has only to have a jogging function, thus permitting a simplified moving mechanism. Meanwhile, the accuracy for positioning the observation section and the collecting section relative to the acquiring section is not strictly required, as compared with that for the stage, so that adequate positioning accuracy therefor can be achieved by the positioning carried out by the moving mechanism.

In the aforesaid invention, the observation section may be provided with a reflecting member that reflects, at the first position, an image of the substrate on the stage in a direction that intersects with a vertical direction, and an imaging member that photographs the image reflected by the reflecting member.

This arrangement enables the imaging member to photograph the image of the substrate, which is transmitted from the reflecting member, at an arbitrary position, so that the degrees of freedom of the disposition of the imaging member and the optical design can be increased. Further, the moving mechanism is provided with the reflecting member, which is smaller and lighter than the imaging member, thus allowing the configuration of the moving mechanism to be further simplified.

In the aforesaid invention, the substrates may be attached to the sheet member such that the substrates can be detached by being pushed from the sheet member side, and the acquiring section may be provided with a pushing member that has a pushing end butted against some substrates through the sheet member and a moving mechanism that moves the pushing member in the substantially vertical direction.

With this arrangement, some substrates positioned substantially vertically below the pushing end can be selectively detached from the sheet member and dropped by a simple operation of merely moving the pushing member toward the substrates by the moving mechanism and pushing the substrates by the pushing end through the sheet member.

In the aforesaid invention, the substrates may be attached to the sheet member by an adhesive agent, the adhesive force of which is decreased by the irradiation of ultraviolet rays, and the acquiring section may have an emitting surface that irradiates ultraviolet rays to the predetermined relative position.

Thus, some substrates disposed at the predetermined relative position can be selectively detached from the sheet member and dropped by a simple operation of merely emitting ultraviolet rays from the emitting surface.

### Advantageous Effect of the Invention

The present invention provides an advantageous effect in that the configuration of the stage moving mechanism can be made simpler while still adopting an inverted type optical design.

### Brief Description of the Drawings

FIG. 1 is an entire configuration diagram of a substrate collecting device according to an embodiment of the present invention.
FIG. 2 is a diagram illustrating an example of substrates applied to the substrate collecting device of FIG. 1.
FIG. 3 is a partial configuration diagram of the substrate collecting device of FIG. 1, in which a moving unit is disposed at a second position.
FIG. 4 is a partial configuration diagram illustrating an operation of the substrate collecting device of FIG. 1.
FIG. 5 is a partial configuration diagram illustrating a modified example of the substrate collecting device of FIG. 1.
FIG. 6 is a partial configuration diagram illustrating another modified example of the substrate collecting device of FIG. 1.
FIG. 7 is a partial configuration diagram illustrating yet another modified example of the substrate collecting device.

### Mode for carrying out the Invention

The following will describe a substrate collecting device 1 according to an embodiment of the present invention with reference to the accompanying drawings.

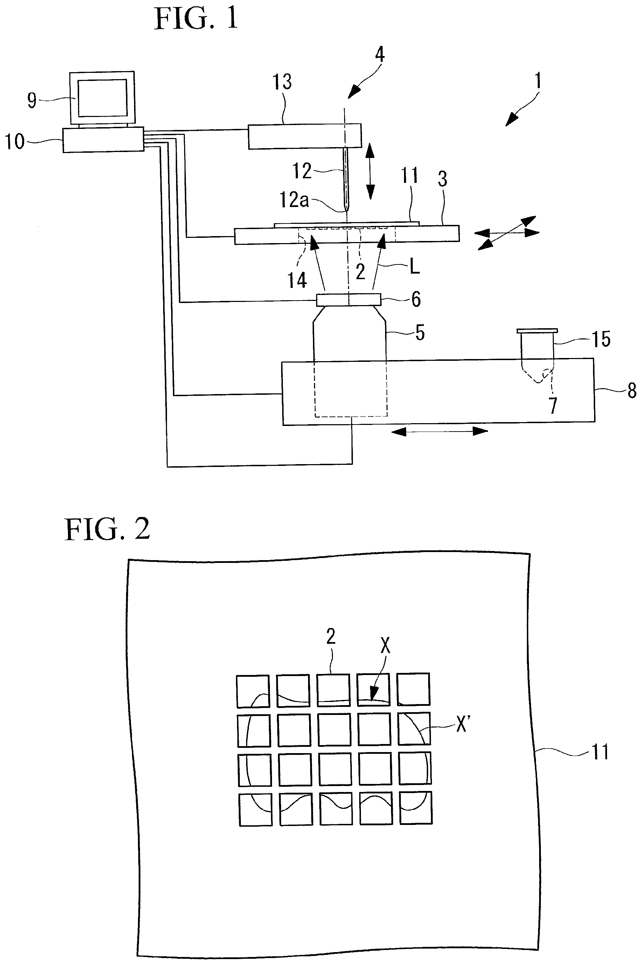

As illustrated in FIG. 1, the substrate collecting device 1 according to the present embodiment is provided with a substantially horizontal stage 3 on which a substrate 2 is placed, an acquiring section 4 disposed above the stage 3, an objective lens (observation section) 5 disposed below the stage 3, an illuminating section 6, a collecting section 7, a moving unit (moving mechanism) 8, which holds and integrally moves the objective lens 5, the illuminating section 6 and the collecting section 7, a display section 9 which displays an image observed through the objective lens 5, and a controller 10 which controls the stage 3, the acquiring section 4, the illuminating section 6, and the moving unit 8.

As illustrated in FIG. 2, a plurality of the substrates 2 are arranged with gaps thereamong on one surface of a sheet (sheet member) 11. A fragment X' of a section X cut out from a biological tissue is attached to the front surface of each of the substrates 2. The plurality of the substrates 2 are prepared by, for example, attaching an original substrate, such as a cover glass, which has the section X attached to the front surface thereof, to the sheet 11 and then cutting the original substrate together with the section X on the sheet 11. The shape and dimensions of each of the substrates 2 are not particularly restricted. For example, each of the substrates 2 is rectangular and has a thickness of 1 mm or less and a side dimension of 5 mm or less.

The back surface of each of the substrates 2 is detachably attached to the sheet 11 by an adhesive agent having an appropriate adhesive force. More specifically, the substrate 2 is attached to the sheet 11 with an adhesive force that allows the substrate 2 to come off from the sheet 11 when the back surface of the substrate 2 is pushed from the sheet 11 side with a force that is larger than the weight of the substrate 2 itself and that is equal to or larger than a predetermined magnitude. Further, the substrates 2 and the sheet 11 are optically transparent or translucent.

The sheet 11 is substantially horizontally placed on the stage 3, which can be moved in the substantially horizontal direction. Further, the stage 3 has a window 14 that penetrates in the direction of the thickness at the center thereof.

The acquiring section 4 has a thin and long, straight rod-shaped needle member (pushing member) 12 and a manipulator 13. The distal surface (pushing end) of the needle member 12 has a diameter dimension that is substantially equal to or less than the substrate 2. The manipulator 13 is capable of holding the needle member 12 with the distal end thereof facing substantially vertically downward and moving the needle member 12 in the substantially vertical direction. The manipulator 13 is adapted to move the needle member 12, which is held by the manipulator 13, in the vertical direction along the longitudinal direction thereof by being operated in the substantially vertical direction under the control by the controller 10.

The objective lens 5, the illuminating section 6 and the collecting section 7 are provided on the same moving unit 8. To be specific, the objective lens 5 is fixed to the moving unit 8 with the optical axis thereof set in the substantially vertical direction. Through the objective lens 5, the substrate 2 placed at the position of the window 14 of the stage 3 is observed from below. The image formed by the objective lens 5 is displayed on the display section 9 through an optical system, which is not illustrated.

The illuminating section 6 is an annular lamp mounted on the distal surface of the objective lens 5 such that the lamp surrounds the distal surface and is composed of, for example, a white LED or an optical fiber. The illuminating section 6 irradiates illumination light L to the substrate 2 on the stage 3 from below. The illuminating section 6 may be constructed to irradiate light that has an excitation wavelength of a fluorescent material contained in the section X to the substrate 2 as the illumination light L so that the fluorescence from the section X is observed through the objective lens 5.

The collecting section 7 is shaped as a hole which is formed in the moving unit 8 and which supports the bottom of a collecting container 15 shaped like a centrifugal tube.

The moving unit 8 is provided such that it can be moved in the horizontal direction by a direct acting guide, which is not illustrated. Further, the moving unit 8 is adapted to be positioned at two positions by a positioning mechanism, such as a click mechanism provided on the direct acting guide. More specifically, the moving unit 8 is provided such that it is alternatively positioned at a first position at which the optical axis of the objective lens 5 is positioned vertically below the needle member 12 and a second position at which the collecting section 7 is positioned vertically below the needle member 12. In FIG. 1, the moving unit 8 is disposed at the first position.

The controller 10 is adapted to control the operations of the stage 3, the illuminating section 6, the moving unit 8 and the manipulator 13 in response to input operations by an operator. The operations the input to the controller 10 by the operator are carried out by using, for example, a user interface, which is provided on the controller 10 and which is not illustrated.

The operations of the stage 3, the illuminating section 6, the moving unit 8, and the manipulator 13 may be controlled by the manual operations by the operator.

The operation of the substrate collecting device 1 constructed as described above will now be explained.

In order to collect some of the plurality of the substrates 2, which have been attached to the sheet 11, by the substrate collecting device 1 according to the present embodiment, the sheet 11 is first placed on the stage 3. At this time, the sheet 11 is set on the stage 3 such that the substrates 2 are disposed at the window 14 and also the substrates 2 are disposed on the bottom side of the sheet 11. A part of the sheet 11 may be fixed to the stage 3 by a clip or the like such that the position of the sheet 11 is stabilized on the stage 3.

Then, the operator disposes the moving unit 8 at the first position and turns on the illuminating section 6. Thus, the substrates 2 on the stage 3 are observed through the objective lens 5 and the images of the substrates 2 are displayed on the display section 9. At this time, the substrates 2 and the sheet 11 are transparent or translucent and the section X attached to the substrate 2 is sufficiently thin, so that the needle member 12 disposed behind the sheet 11 relative to the objective lens 5 can be also observed through the objective lens 5.

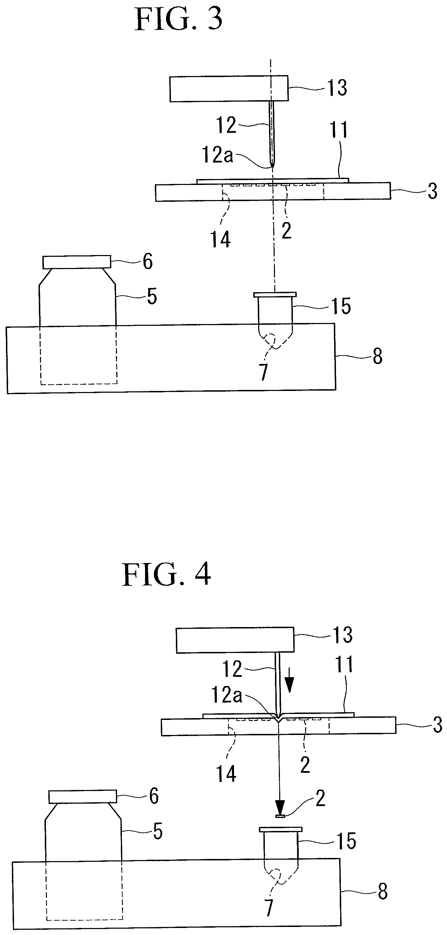

The operator adjusts the positions of the substrates 2 relative to the needle member 12 by moving the stage 3 in the horizontal direction and the stage 3 is positioned such that the one desired substrate 2 overlaps the distal surface of the needle member 12 in the image displayed on the display section 9. Subsequently, the operator moves the moving unit 8 to the second position to dispose the collecting container 15 located at the collecting section 7 at substantially vertically below the needle member 12, as illustrated in FIG. 3. Then, the operator operates the manipulator 13 downward to move the needle member 12 downward thereby to touch the distal surface of the needle member 12 against the back surface of the desired substrate 2, as illustrated in FIG. 4.

The substrate 2 pushed by the distal surface of the needle member 12 comes off from the sheet 11 and falls substantially vertically downward to be collected into the collecting container 15. To collect two or more substrates 2, the moving unit 8 is moved back to the first position, and the procedure from the step for positioning the stage 3 to the step for pushing the substrate 2 by the needle member 12 is repeated.

As described above, the present embodiment makes it possible to both observe and collect the substrates 2 by alternatively placing the objective lens 5 and the collecting container 15 substantially vertically below the stage 3 by switching the position of the moving unit 8 while still adopting by the inverted type optical design whereby to observe the substrates 2 on the stage 3 from below the stage 3 through the objective lens 5.

In this case, the movement range required of the stage 3 is a sufficiently narrow range required for the positioning between the distal surface of the needle member 12 and the substrate 2. Hence, the moving mechanism of the stage 3 is required to be provided merely with a jogging mechanism that moves with a minute travel distance within a relatively narrow movement range, thus making it possible to simplify the construction of the moving mechanism of the stage 3.

Meanwhile, the accuracy for positioning the objective lens 5 and the collecting section 7 relative to the needle member 12 and the substrate 2 positioned vertically below the needle member 12 is not strictly required, as compared with that for the stage 3. Hence, for the objective lens 5 and the collecting section 7, positioning accuracy that is high enough for practical use can be easily achieved by a positioning mechanism, such as a click mechanism, even when the objective lens 5 and the collecting section 7 are moved for a relatively long distance by the moving unit 8.

In the present embodiment, the illuminating section 6 is adapted to be integrally moved by the moving unit 8 together with the objective lens 5 and the collecting section 7. Alternatively, however, the illuminating section 6 may be provided independently of the moving unit 8. For example, the illuminating section 6 may be fixed to the stage 3.

With this arrangement, the substrates 2 on the stage 3 can be illuminated by the illuminating section 6 at an arbitrary timing independently of the positional relationship between the objective lens 5 and the stage 3.

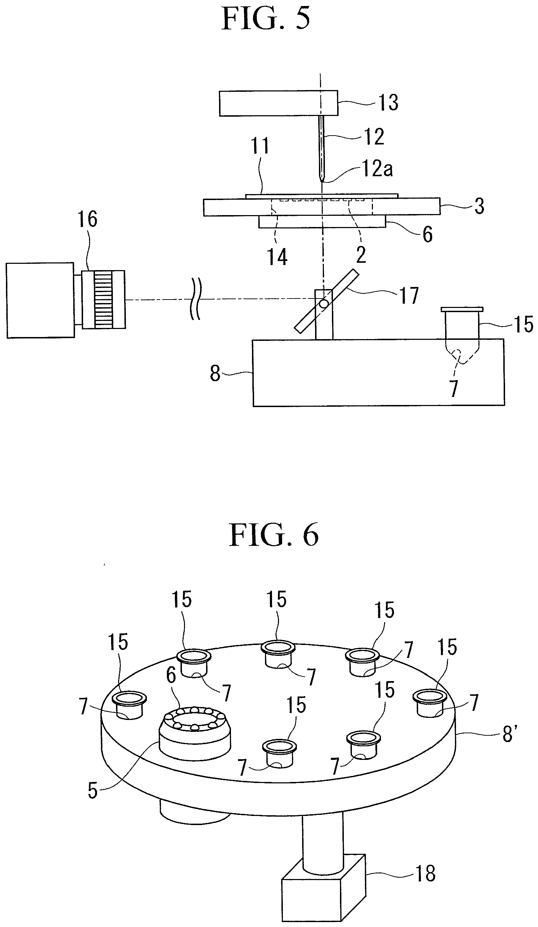

Further, in the present embodiment, the objective lens 5 has been used as the means for observing the substrates 2. Alternatively, however, a camera (imaging member) 16 may be used. In this case, preferably, a mirror (reflecting member) 17 is provided, which is fixed to a moving unit 8 and laterally reflects the image of a substrate 2 positioned at a window 14 at a first position and the camera 16 is disposed in the direction of reflection from the mirror 17, as illustrated in FIG. 5.

Transmitting the image of the substrate 2 on the stage 3 to the camera 16 by the mirror 17 as described above makes it possible to provide the camera 16 independently of the moving unit 8, thus permitting a higher degree of freedom of the design of the camera 16. Further, the mirror 17 provided on the moving unit 8 is smaller and lighter than the objective lens 5 or the camera 16, so that the construction of the moving unit 8 can be simplified.

Further, in the present embodiment, the description has been given of the hole for accommodating the single collecting container 15 as the collecting section 7; however, the configuration of the collecting section 7 is not limited thereto. The collecting section may be a groove in which a microplate having a plurality of holes is installed. Further, the collecting section may be formed of a member having adhesiveness to capture the falling substrates 2 by the adhesiveness.

Further, a moving unit 8 may be provided with a plurality of collecting sections 7 and the moving unit 8 may be constructed such that the moving unit 8 can be positioned at three or more positions at which the individual collecting sections 7 are positioned substantially vertically below needle members 12. Further, the moving unit 8 may be rotatively moved.

FIG. 6 illustrates a disc shaped moving unit 8'. The moving unit 8' has a plurality of (seven in the illustrated example) collecting sections 7, each of which is formed of a hole into which the bottom of a collecting container 15 is inserted, the collecting sections 7 being arranged in the circumferential direction. Reference numeral 18 denotes a stepping motor that rotates the moving unit 8 in the circumferential direction. The stepping motor 18 rotates the moving unit 8 in steps such that an objective lens 5 and the plurality of the collecting containers 15 inserted in the collecting sections 7 are alternatively positioned substantially vertically below a needle member 12.

This arrangement also makes it possible to alternatively position the objective lens 5 and the collecting containers 15 substantially vertically below the needle member 12 by the moving unit 8.

Further, in the present embodiment, the acquiring section 4 is provided with the needle member 12; however, the construction of the acquiring section 4 is not limited thereto. For example, the acquiring section 4 may be provided with a tubular member in place of the needle member 12. Further, the needle member 12 may be inserted in the tubular member such that the distal end of the needle member 12 juts out.

Further, a plurality of needle members 12 may be bundled and held by the manipulator 13, or a crown needle having the distal portion thereof split into a plurality of ends may be used as the needle member 12. In the case where the acquiring section 4 has the needle member 12 with a plurality of distal surfaces as described above, the acquiring section 4 may be constructed such that a plurality of the substrates 2 are simultaneously pushed by the plurality of the distal surfaces of the needle member 12 to detach and drop the substrates 2.

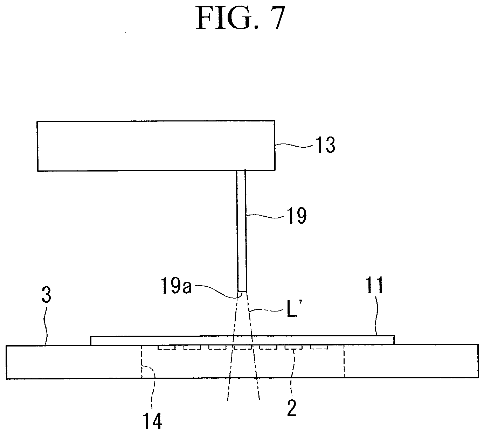

Further, in place of the needle member 12, an optical fiber 19 having a small-diameter distal surface (emitting surface) 19a, as illustrated in FIG. 7, may be used. In this case, an ultraviolet detaching type adhesive agent, the adhesive force of which decreases when exposed to light of a particular wavelength, e.g. ultraviolet light, is used as the adhesive agent for bonding substrates 2 to a sheet. Then an ultraviolet ray L' is irradiated to the sheet 11 from the distal surface 19a of the optical fiber 19, and the substrate 2 to which the ultraviolet ray L' has been irradiated is pushed by the optical fiber 19 as necessary and comes off from the sheet 11 and falls. At this time, the dimensions of the distal surface 19a, the emitting angle of the ultraviolet ray L' from the distal surface 19a, the distance between the distal surface 19a and the stage 3, and the like are set such that the ultraviolet ray L' is irradiated to only the desired substrates among a plurality of substrates 2 bonded to the sheet 11.

### Description of Reference Numerals

- 1: substrate collecting device
- 2: substrate
- 3: stage
- 4: acquiring section
- 5: objective lens (observation section)
- 6: illuminating section
- 7: collecting section
- 8: moving unit (moving mechanism)
- 9: display section
- 10: controller
- 11: sheet (sheet member)
- 12: needle member (pushing member)
- 12a: distal surface (pushing end)
- 13: manipulator
- 14: window
- 15: collecting container
- 16: camera (observation section, imaging member)
- 17: mirror (observation section, reflecting member)
- 18: stepping motor
- 19: optical fiber
- 19a: distal surface (emitting surface)
- X: section
- X': fragment

## Claims

1. A substrate collecting device (1) that detaches and collects some substrates (2) among a plurality of substrates (2), which have been attached to a sheet member (11) such that the substrates (2) can be detached by carrying out a predetermined operation, from the sheet member (11), **characterized in that** it comprises:
a stage (3) on which the sheet member (11) is placed with the plurality of the substrates (2) facing downward and which is movable in a horizontal direction;
an acquiring section (4) which causes the substrates (2) to come off from the sheet member (11) and fall by carrying out the predetermined operation on the substrates (2) on the stage (3) from above the stage (3);
an observation section (5) for observing the substrates (2) on the stage (3) from under the stage (3);
a collecting section (7) that collects, under the stage(3), the substrates (2) which have fallen from the stage (3); and
a moving mechanism (8) which moves the observation section (5) and the collecting section (7) integrally in the horizontal direction,
wherein the acquiring section (4) carries out the predetermined operation on the some substrates (2) disposed at a predetermined relative position with respect to the acquiring section (4), and
the moving mechanism (8) is capable of positioning the observation section (5) and the collecting section (7) at a first position at which the observation section (5) is positioned substantially vertically below the predetermined relative position and a second position at which the collecting section (7) is disposed substantially vertically below the predetermined relative position.

2. The substrate collecting device (1) according to claim 1,
wherein the observation section (5) comprises:
a reflecting member (17) that reflects, at the first position, an image of the substrate (2) on the stage (3) in a direction that intersects with a vertical direction; and
an imaging member (16) that photographs the image reflected by the reflecting member (17).

3. The substrate collecting device (1) according to claim 1 or 2,
wherein the substrates (2) are attached to the sheet member (11) such that the substrates (2) can be detached by being pushed from the sheet member (11) side, and
the acquiring section (4) comprises a pushing member (12) that has a pushing end (12a) butted against the some substrates (2) through the sheet member (11) and a moving mechanism (8) that moves the pushing member (12) in the substantially vertical direction.

4. The substrate collecting device (1) according to claim 1 or 2,
wherein the substrates (2) are attached to the sheet (11) member by an adhesive agent, the adhesive force of which is decreased by the irradiation of ultraviolet rays, and
the acquiring section (4) has an emitting surface (19a) that irradiates ultraviolet rays to the predetermined relative position.

## Patentansprüche

1. Substratsammelvorrichtung (1), die gewisse Substrate (2) aus einer Mehrzahl von Substraten (2), die an ein Plattenelement (11) angehaftet wurden, löst und sammelt, so dass die Substrate (2) durch Durchführen eines vordefinierten Vorgangs vom Plattenelement (11) gelöst werden können, **dadurch gekennzeichnet, dass** sie umfasst:
eine Plattform (3), auf der das Plattenelement (11) platziert ist, wobei die Mehrzahl der Substrate (2) nach unten gerichtet ist, und die in einer horizontalen Richtung beweglich ist;
einen Erfassungsabschnitt (4), der bewirkt, dass sich die Substrate (2) durch Durchführen eines vordefinierten Vorgangs an den Substraten (2) auf der Plattform (3) vom Plattenelement (11) lösen und von oberhalb der Plattform (3) herunterfallen;
einen Beobachtungsabschnitt (5) zum Beobachten der Substrate (2) auf der Plattform (3) von unter der Plattform (3);
einen Sammelabschnitt (7), der die Substrate (2), die von der Plattform (3) gefallen sind, unter der Plattform (3) sammelt; und
einen Bewegungsmechanismus (8), der den Beobachtungsabschnitt (5) und den Sammelabschnitt (7) in horizontaler Richtung integral bewegt,
wobei der Erfassungsabschnitt (4) den vordefinierten Vorgang an den gewissen Substraten (2) durchführt, die in einer vordefinierten relativen Position in Bezug auf den Erfassungsabschnitt (4) angeordnet sind, und
der Bewegungsmechanismus (8) in der Lage ist, den Beobachtungsabschnitt (5) und den Sammelabschnitt (7) in einer ersten Position, in der der Beobachtungsabschnitt (5) im Wesentlichen vertikal unterhalb der vordefinierten relativen Position positioniert ist, und einer zweiten Position, in der der Sammelabschnitt (7) im Wesentlichen vertikal unterhalb der vordefinierten relativen Position positioniert ist, zu positionieren.

2. Substratsammelvorrichtung (1) nach Anspruch 1,
wobei der Beobachtungsabschnitt (5) umfasst:
ein Reflexionselement (17), das ein Bild des Substrats (2) auf der Plattform (3) in der ersten Position in eine Richtung reflektiert, die sich mit einer vertikalen Richtung schneidet; und
ein Bildgebungselement (16), das das vom Reflexionselement (17) reflektierte Bild aufnimmt.

3. Substratsammelvorrichtung (1) nach Anspruch 1 oder 2,
wobei die Substrate (2) so am Plattenelement (11) angehaftet werden, dass die Substrate (2) durch Schieben dieser von der Seite des Plattenelements (11) aus gelöst werden können, und
der Erfassungsabschnitt (4) ein Schiebeelement (12), das ein Schiebeende (12a) aufweist, das durch das Plattenelement (11) an den gewissen Substraten (2) anliegt, und einen Bewegungsmechanismus (8) umfasst, der das Schiebeelement (12) in die im Wesentlichen vertikale Richtung bewegt.

4. Substratsammelvorrichtung (1) nach Anspruch 1 oder 2,
wobei die Substrate (2) durch ein Klebemittel am Plattenelement (11) angehaftet sind, dessen Klebewirkung durch die Bestrahlung von ultravioletten Strahlen verringert wird, und
der Erfassungsabschnitt (4) eine Emissionsfläche (19a) aufweist, die ultraviolette Strahlen auf die vordefinierte relative Position abstrahlt.

## Revendications

1. Dispositif de collecte de substrat (1) qui détache et collecte certains substrats (2) parmi une pluralité de substrats (2), qui ont été attachés à un élément en feuille (11) de telle sorte que les substrats (2) peuvent être détachés en réalisant une opération prédéterminée, à partir de l'élément en feuille (11), **caractérisé par le fait qu'**il comprend :
une platine (3) sur laquelle l'élément en feuille (11) est placé avec la pluralité de substrats (2) tournés vers le bas et qui est mobile dans une direction horizontale ;
une section d'acquisition (4) qui amène les substrats (2) à sortir de l'élément en feuille (11) et tomber en réalisant l'opération prédéterminée sur les substrats (2) sur la platine (3), depuis le dessus de la platine (3) ;
une section d'observation (5) pour observer les substrats (2) sur la platine (3) depuis le dessous de la platine (3) ;
une section de collecte (7) qui collecte, sous la platine (3), les substrats (2) qui sont tombés de la platine (3) ; et
un mécanisme de déplacement (8) qui déplace la section d'observation (5) et la section de collecte (7) d'un seul tenant dans la direction horizontale,
la section d'acquisition (4) réalisant l'opération prédéterminée sur les certains substrats (2) disposés dans une position relative prédéterminée par rapport à la section d'acquisition (4), et
le mécanisme de déplacement (8) étant capable de positionner la section d'observation (5) et la section de collecte (7) dans une première position dans laquelle la section d'observation (5) est positionnée sensiblement verticalement sous la position relative prédéterminée et une seconde position dans laquelle la section de collecte (7) est disposée sensiblement verticalement sous la position relative prédéterminée.

2. Dispositif de collecte de substrat (1) selon la revendication 1,
dans lequel la section d'observation (5) comprend :
un élément de réflexion (17) qui réfléchit, dans la première position, une image du substrat (2) sur la platine (3) dans une direction qui coupe une direction verticale ; et
un élément d'imagerie (16) qui photographie l'image réfléchie par l'élément de réflexion (17).

3. Dispositif de collecte de substrat (1) selon la revendication 1 ou 2,
dans lequel les substrats (2) sont attachés à l'élément en feuille (11) de telle sorte que les substrats (2) peuvent être détachés en étant poussés depuis le côté de l'élément en feuille (11), et
la section d'acquisition (4) comprend un élément de poussée (12) qui a une extrémité de poussée (12a) en butée contre les certains substrats (2) à travers l'élément en feuille (11) et un mécanisme de déplacement (8) qui déplace l'élément de poussée (12) dans la direction sensiblement verticale.

4. Dispositif de collecte de substrat (1) selon la revendication 1 ou 2,
dans lequel les substrats (2) sont attachés à l'élément en feuille (11) par un agent adhésif, dont la force d'adhérence est diminuée par l'irradiation de rayons ultraviolets, et
la section d'acquisition (4) a une surface d'émission (19a) qui irradie des rayons ultraviolets vers la position relative prédéterminée.
